# EUROPÄISCHE PATENTSCHRIFT

(11) **EP 0 771 698 B1**
(45) Veröffentlichungstag und Bekanntmachung des Hinweises auf die Patenterteilung: **03.05.2000**
(21) Anmeldenummer: 96116574.3
(22) Anmeldetag: 16.10.1996
(51) Int. Cl.: B60R 21/22

(54) **Gassack-Seitenaufprall-Schutzeinrichtung**
Side-impact airbag protection device
Dispositif de protection contre les chocs latéraux à coussin gonflable

(30) Priorität: 02.11.1995 DE 29517372 U
(43) Veröffentlichungstag der Anmeldung: 07.05.1997
(73) Patentinhaber: TRW Occupant Restraint Systems GmbH & Co. KG, 73551 Alfdorf (DE)
(72) Erfinder: Eyrainer, Heinz, 73550 Waldstetten (DE)
(74) Vertreter: Degwert, Hartmut, Dipl.-Phys.

(56) Entgegenhaltungen:
- EP-A- 0 653 335
- EP-A- 0 714 818
- DE-C- 4 430 412
- PATENT ABSTRACTS OF JAPAN vol. 018, no. 602 (M-1705), 16.November 1994 & JP 06 227348 A (TOYOTA MOTOR CORP), 16.August 1994,
- PATENT ABSTRACTS OF JAPAN vol. 017, no. 527 (M-1484), 22.September 1993 & JP 05 139232 A (TOYOTA MOTOR CORP), 8.Juni 1993,
- RESEARCH DISCLOSURE, Nr. 385, 1.Mai 1996, Seite 329/330 XP000599747 "SIDE IMPACT AIR BAG AND METHOD FOR FOLDING"
- RESEARCH DISCLOSURE, Nr. 385, 1.Mai 1996, Seite 297/298 XP000599723 "SIDE IMPACT AIR BAG"
- PATENT ABSTRACTS OF JAPAN vol. 095, no. 001, 28.Februar 1995 & JP 06 298027 A (NISSAN MOTOR CO LTD), 25.Oktober 1994,

## Beschreibung

Die Erfindung betrifft eine Gassack-Seitenaufprall-Schutzeinrichtung für Fahrzeuginsassen gemäß dem Oberbegriff des Anspruchs 1.

Eine solche Schutzeinrichtung dient dazu, bei einem Seitenaufprall einen Kontakt des Fahrzeuginsassen mit Teilen des Fahrzeugs wie der B-Säule oder der Innenseite der Tür oder mit insbesondere im Kopfbereich des Fahrzeuginsassen etwa durch eine Seitenscheibe eindringenden Objekten, beispielsweise einem LKW oder einem Pfosten, zu verhindern. Jedoch wird der Kopfbereich durch einen solchen Gassack ungenügend geschützt, weil die Entfaltung des Gassacks nach oben oftmals durch den angelegten Sicherheitsgurt behindert wird. Bei bekannten Seitenaufprall-Gassäcken mit weitgehend rechteckiger Kissenform ist außerdem, bedingt durch das sich ergebende hohe Volumen des Gassacks, eine rechtzeitige und funktionsgerechte Füllung nicht oder nur durch den Einsatz von unverhältnismäßig großen Druckgasquellen möglich.

Eine Gassack-Seitenaufprall-Schutzeinrichtung gemäß des Oberbegriffes des Anspruchs 1 ist in der EP-A-0 653 335 beschrieben. Dort ist ein Thorax-Gassack gezeigt, der mit einem Kopfgassack in Verbindung steht, wobei der Thorax-Gassack durch Unterteilungsnähte in mehrere in Strömungsverbindung stehende Kammern unterteilt ist. Beide Gassäcke werden über eine gemeinsame Druckgasquelle befüllt, wobei alle Kammern des Thorax-Gassackes gleichzeitig befüllt werden.

Durch die Erfindung ist eine Gassack-Seitenaufprall-Schutzeinrichtung mit den Merkmalen des Anspruchs 1 geschaffen. Durch diese Anordnung der Öffnungen und der Unterteilungsnaht ist dafür gesorgt, daß der Thoraxschutz-Gassack zuerst befüllt wird und in der notwendigen Zeit zur Verfügung steht, während der Kopfschutz-Gassack, der erst zu einem späteren Zeitpunkt voll befüllt sein muß, danach befüllt wird. Auf diese Weise wird bei kleinstmöglichem Gassack-Volumen ein optimaler Entfaltungsvorgang und eine optimale Füllzeit erreicht. Durch die Trennung von Thoraxschutz-Gassack und Kopfschutz-Gassack können die Gassäcke in für die jeweiligen Einbauverhältnisse optimaler Weise aufgeblasen und daher insbesondere nicht durch einen Sicherheitsgurt behindert werden.

Weitere vorteilhafte Merkmale der Erfindung sind in den Unteransprüchen angeführt.

Die Erfindung wird nachfolgend unter Bezugnahme auf die beigefügte Zeichnung beschrieben. In dieser zeigen:
- Fig. 1 eine schematische Darstellung einer ersten Ausführungsform einer erfindungsgemäßen Schutzeinrichtung mit Thoraxschutz- und Kopfschutz-Gassack in entfaltetem Zustand;
- Fig. 2 eine schematische Seitenansicht der Schutzeinrichtung von Fig. 1;
- Fig. 3 einen Schnitt entlang der Linie A-A aus Fig. 2, wobei die Gassäcke druckfrei sind;
- Fig. 4 eine Ansicht entsprechend derjenigen von Fig. 3, wobei die Gassäcke druckbeaufschlagt sind;
- Fig. 5 eine schematische Darstellung einer zweiten Ausführungsform einer erfindungsgemäßen Schutzeinrichtung mit Kopfschutz- und Thoraxschutz-Gassack in entfaltetem Zustand;
- Fig. 6 eine schematische Seitenansicht der Schutzeinrichtung aus Fig. 5;
- Fig. 7 einen Schnitt entlang der Linie B-B aus Fig. 6, wobei die Gassäcke druckfrei sind; und
- Fig. 8 eine Ansicht entsprechend derjenigen von Fig. 7, wobei die Gassäcke druckbeaufschlagt sind.

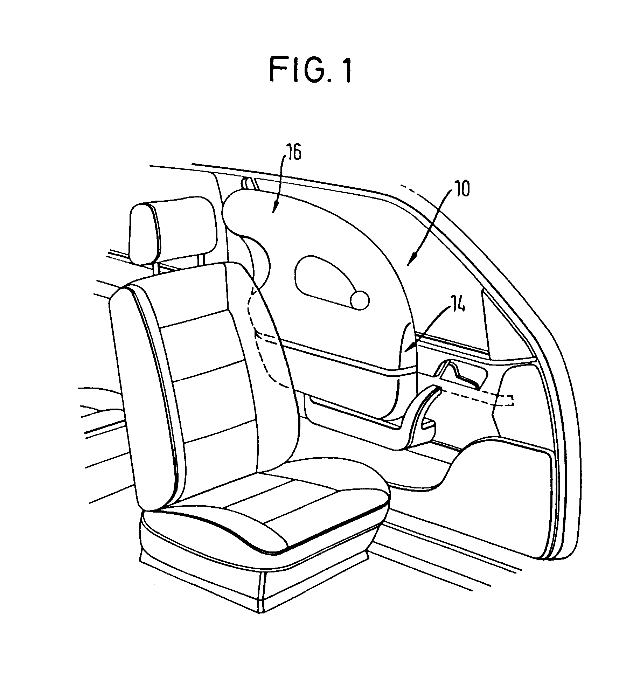

In den Fig. 1 bis 4 ist eine erste Ausführungsform einer erfindungsgemäßen Gassack-Seitenaufprall-Schutzeinrichtung 10 dargestellt. Diese besteht im wesentlichen aus einer Druckgasquelle 12, einem mit dieser in Strömungsverbindung stehenden Thoraxschutz-Gassack 14 sowie einem Kopfschutz-Gassack 16, der nach Art einer eigenen Kammer am Thoraxschutz-Gassack angebracht ist. Im Ruhezustand sind die beiden Gassäcke platzsparend zusammengefaltet, so daß die gesamte Schutzeinrichtung hinter der Verkleidung einer in Fig. 1 schematisch dargestellten Fahrzeugtür angeordnet ist. Im Bedarfsfall kann die Druckgasquelle 12 durch eine (nicht dargestellte) Auslösesensorik gezündet werden, so daß eine bestimmte Menge von unter Druck stehendem Gas freigesetzt wird. Durch dieses Gas werden die beiden Gassäcke entfaltet, so daß sie aus der Verkleidung austreten und sich seitlich der Fahrzeugtüre entfalten. Die Anordnung der beiden Gassäcke im entfalteten Zustand ist ebenfalls in Fig. 1 zu sehen.

Die Druckgasquelle 12 kann jeder beliebige Gasgenerator sein, der in der üblicherweise zur Verfügung stehenden Zeit die zum Aufblasen der beiden Gassäcke erforderliche Menge an Druckgas bereitstellen kann. Solche Druckgasquellen sind auf dem Gebiet der Fahrzeuginsassenrückhaltetechnik bekannt. Die Druckgasquelle 12 weist eine schematisch dargestellte Auslaßöffnung 18 auf, deren Umfangsbereich mit dem Umfangsbereich 20 einer Einblasöffnung des Thoraxschutz-Gassackes 14 durch schematisch dargestellte Befestigungselemente 22 verbunden ist.

Der Thoraxschutz-Gassack 14 ist durch eine Unterteilungs-Naht 24, durch die ein Gewebeteil 25 abgenäht ist, in eine erste Kammer 26 und eine zweite Kammer 28 unterteilt. Die Einblasöffnung liegt in der ersten Kammer des Thoraxschutz-Gassackes 14. In der zweiten Kammer 28 des Thoraxschutz-Gassackes 14 ist eine Ausströmöffnung 30 ausgebildet, die mit einer Einströmöffnung des Kopfschutz-Gassackes zusammenfällt. Im Bereich der Ausströmöffnung 30 ist eine Abtrenn-Naht 32 vorgesehen, durch die ein Gewebeteil 34 abgenäht ist. Dadurch ist die Querschnittsfläche der Ausströmöffnung 30 bzw. der Einströmöffnung vermindert.

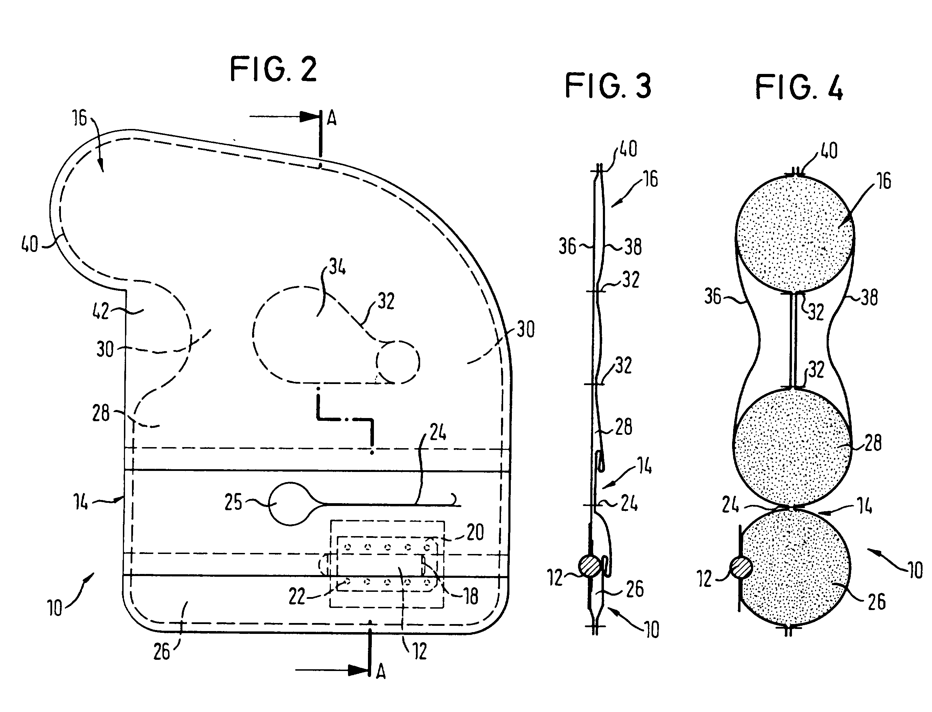

Durch die Unterteilungs-Naht 24 und die Abtrenn-Naht 32 haben sowohl die beiden Kammern des Thoraxschutz-Gassackes 14 sowie der Kopfschutz-Gassack 16 eine allgemein zylindrische Form, wobei die beiden Kammern des Thoraxschutz-Gassackes 14 an ihren axialen Enden miteinander in Verbindung stehen und wobei der Kopfschutz-Gassack 16 mit der zweiten Kammer 18 des Thoraxschutz-Gassackes 14 über die Ausströmöffnung 30 in Verbindung steht. Vorteilhafterweise sind die beiden Gassäcke 14, 16 einteilig ausgebildet, indem zwei Gewebelappen 36, 38 durch eine Umfangsnaht 40 miteinander verbunden werden. Durch die Umfangsnaht 40 ist auch eine Gewebefläche 42 abgenäht, welche bei entfalteten Gassäcken den Kopfschutz-Gassack 16 relativ zum Thoraxschutz-Gassack 14 stabilisiert. Da eine solche Gewebefläche eine stabilisierende Wirkung offensichtlich nur bei einer Zugbelastung haben kann, sucht der Kopfschutz-Gassack 16, bedingt durch die Gestaltung der Umfangsnaht 40 und der Abtrenn-Naht 32, sich im Bereich der Gewebefläche 42 bezüglich Fig. 2 nach oben vom Thoraxschutz-Gassack 14 zu entfernen, wenn die beiden Gassäcke 14, 16 aufgeblasen sind.

Das Aufblasen der beiden Gassäcke geschieht in der folgenden Weise: Nach Zündung der Druckgasquelle 12 erzeugt diese unter Druck stehendes Gas, welches in die erste Kammer 26 des Thoraxschutz-Gassackes 14 einströmt. Dabei wird eine Sollbruchstelle der Verkleidung der Fahrzeugtür geöffnet, so daß die Gassäcke aus der Verkleidung austreten können. Das von der Druckgasquelle 12 erzeugte Gas strömt aus der ersten Kammer 26 in die zweite Kammer 28 und aus dieser in den Kopfschutz-Gassack 16. Durch die Unterteilungs-Naht 24 und die Abtrenn-Naht 32 wird das Strömungsverhalten des von der Druckgasquelle 12 erzeugten Gases derart beeinflußt, daß der Thoraxschutz-Gassack 14 vollständig entfaltet ist, bevor der Kopfschutz-Gassack 16 vollständig entfaltet ist. Dieser zeitliche Ablauf des Entfaltens der beiden Gassäcke trägt den geometrischen und kinematischen Verhältnissen bei einem Seitenaufprall Rechnung. Da der Oberkörper eines Fahrzeuginsassen näher an der Tür angeordnet ist als dessen Kopf, trifft im Falle eines Seitenaufpralls der Oberkörper eines Fahrzeuginsassen auf den Thoraxschutz-Gassack 14, bevor dessen Kopf auf den Kopfschutz-Gassack 16 trifft. Durch eine geeignete Gestaltung der Nähte 24, 32 kann der gewünschte Luftsackinnendruck in den beiden Kammern 26, 28 des Thoraxschutz-Gassackes 14 während des Aufblasens der beiden Gassäcke eingestellt werden. Ferner kann das durch das Eintauchen des Oberkörpers des Insassen in den Thoraxschutz-Gassack 14 aus diesem verdrängte Gasvolumen zusätzlich zur Füllung des Kopfschutz-Gassackes 16 genutzt werden.

Durch die erfindungsgemäße Gassack-Seitenaufprall-Schutzeinrichtung werden die folgenden Vorteile erzielt: Im Falle eines Seitenaufpralls wird zusätzlich zur Schutzwirkung für den Oberkörper des Fahrzeuginsassen auch eine Schutzwirkung für dessen Kopf bereitgestellt. Hierzu sind keine zusätzlichen Bauelemente notwendig; es müssen lediglich die Gewebeteile in anderer Weise zugeschnitten und vernäht werden, aus denen auch bisher der Thoraxschutz-Gassack gefertigt wurde. Es ist auch keine zusätzliche Druckgasquelle notwendig, die zu einer erhöhten akustischen Belastung des Insassen führen würde, insbesondere wenn sie im Kopfbereich des Fahrzeuginsassen angeordnet ist, wie dies bei Schutzeinrichtungen notwendig ist, die einen getrennten Gassack beispielsweise am oberen Türrahmen vorsehen. Durch die Unterteilung des Thoraxschutz-Gassackes 14 in zwei im wesentlichen zylindrische Kammern 26, 28 sowie durch die Gestaltung des Kopfschutz-Gassackes 16 ebenfalls als im wesentlichen zylindrische Kammer wird eine optimale Schutzwirkung bei gleichzeitig vergleichsweise geringem Volumen der Gassäcke 14, 16 erzielt. Dies wirkt sich günstig auf die Größe der benötigten Druckgasquelle sowie die Aufblaszeit für die beiden Gassäcke aus. Der Kopfschutz-Gassack 16 kann problemlos so gestaltet werden, daß er sich im aufgeblasenen Zustand ausreichend weit nach hinten bis zur B-Säule erstreckt, damit für alle Stellungen des Fahrzeuginsassen eine Schutzwirkung für den Kopf des Fahrzeuginsassen erzielt wird. Durch die Trennung von Thoraxschutz- und Kopfschutz-Gassack kann dieser sich weitgehend unabhängig vom Thoraxschutz-Gassack entfalten, so daß ein sich zwischen der B-Säule und dem Oberkörper des Fahrzeuginsassen erstreckender Sicherheitsgurt das Entfalten des Kopfschutz-Gassackes 16 nicht behindert. Der Kopfschutz-Gassack 16 ist vorteilhafterweise so gestaltet, daß er in Richtung der B-Säule zunehmend höher angeordnet ist. Dies berücksichtigt die üblicherweise geltende Beziehung zwischen der Stellung des Fahrzeugsitzes und der Position des Kopfes eines Fahrzeuginsassen: Ein großer Fahrzeuginsasse, dessen Kopf sich vergleichsweise weit oben befindet, wird üblicherweise eine weit zurückgeschobene Stellung des Fahrzeugsitzes bevorzugen, während ein kleiner Fahrzeuginsasse, dessen Kopf sich im Vergleich dazu weiter unten befindet, eine weiter vorgeschobene Stellung des Fahrzeugsitzes bevorzugen wird.

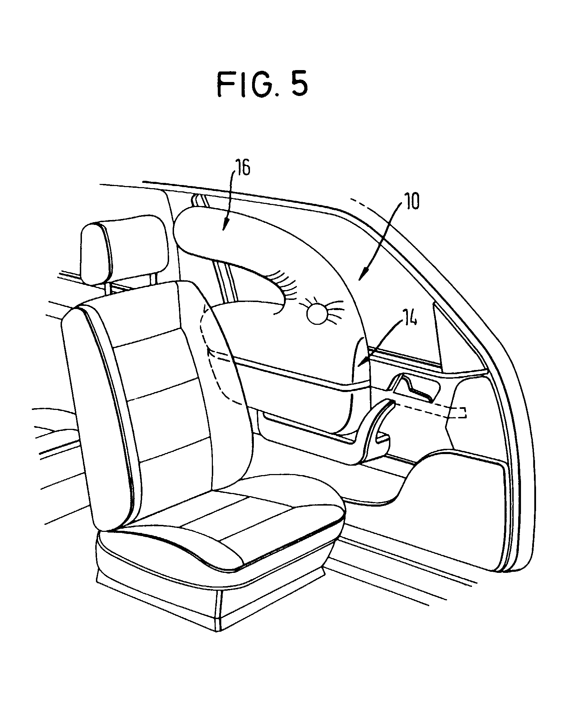

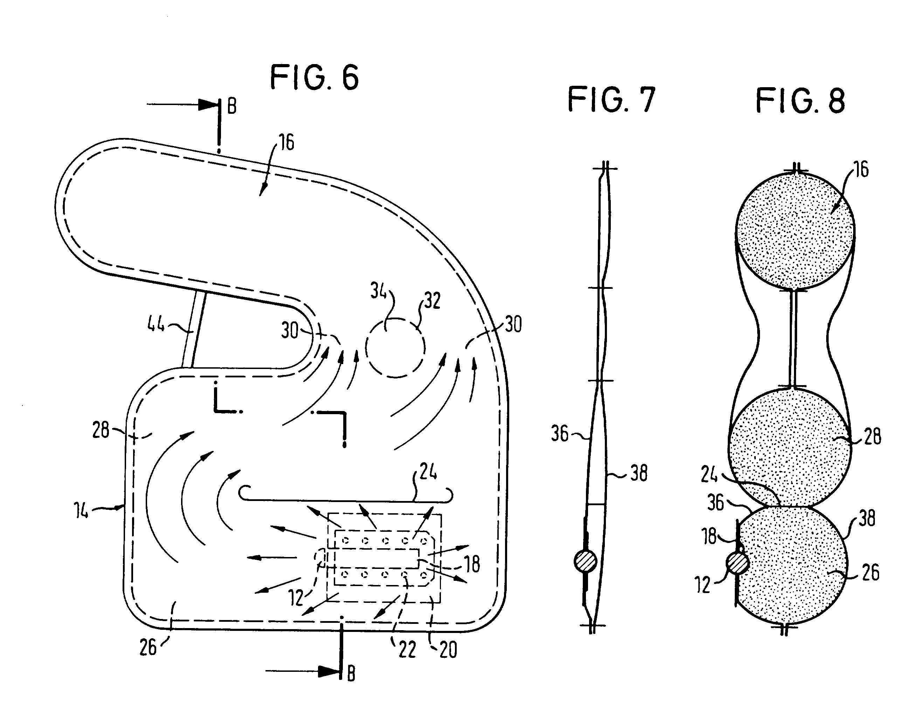

In den Fig. 5 bis 8 ist eine zweite Ausführungsform einer erfindungsgemäßen Gassack-Seitenaufprall-Schutzeinrichtung dargestellt. In diesen Figuren werden für von der ersten Ausführungsform bekannte Elemente dieselben Bezugszeichen verwendet. Nachdem sich die beiden Ausführungsformen in weiten Teilen entsprechen, wird nachfolgend nur auf die Unterschiede der zweiten Ausführungsform gegenüber der ersten Ausführungsform eingegangen.

Ein Unterschied liegt darin, daß die Unterteilungs-Naht 24 bei der zweiten Ausführungsform so ausgeführt ist, daß kein Gewebeteil 25 abgenäht ist. Dies führt zu einem im Vergleich zur ersten Ausführungsform höheren Gesamtvolumen des Thoraxschutz-Gassackes 14. Ein weiterer Unterschied liegt in der Gestalt der Abtrenn-Naht 32. Diese näht bei der zweiten Ausführungsform nur ein vergleichsweise kleines Gewebeteil 34 ab, so daß unter der Annahme einer gleichen Querschnittsfläche der Ausströmöffnung 30 diese (bezüglich der Figuren 1 und 5) bei der zweiten Ausführungsform insgesamt weiter rechts liegt als bei der ersten Ausführungsform. Somit ergibt sich eine ausgeprägte zylindrische Gestalt des Kopfschutz-Gassackes 16. Anstelle der Gewebefläche 42 wird für die Stabilisierung des Kopfschutz-Gassackes 16 relativ zum Thoraxschutz-Gassack 14 ein Fangband 44 verwendet.

## Patentansprüche

1. Gassack-Seitenaufprall-Schutzeinrichtung für Fahrzeuginsassen, die in eine Fahrzeugtür integriert ist und eine Druckgasquelle (12) sowie einen durch diese über eine Einblasöffnung aufblasbaren Thoraxschutz-Gassack (14) aufweist, der sich beim Aufblasen in einem Raum seitlich der Fahrzeugtüre entfaltet, wobei am Thoraxschutz-Gassack (14) eine Ausströmöffnung (30) vorgesehen ist, sowie einen am Thoraxschutz-Gassack (14) angebrachten Kopfschutz-Gassack (16), der sich beim Aufblasen oberhalb des Thoraxschutz-Gassackes (14) entfaltet, wobei eine Einströmöffnung des Kopfschutz-Gassackes (16) mit der Ausströmöffnung (30) des Thoraxschutz-Gassackes (14) zusammenfällt, und eine Unterteilungs-Naht (24), die den Thoraxschutz-Gassack (14) in eine erste und eine zweite Kammer (26, 28) unterteilt, die miteinander in Strömungsverbindung stehen, wobei die Ausströmöffnung (30) von der zweiten Kammer (28) abgeht, dadurch gekennzeichnet, daß die Einblasöffnung in der ersten Kammer (26) liegt, und die Unterteilungsnaht (24) im Strömungsweg von der Druckgasquelle (12) zur Ausströmöffnung (30) liegt.

2. Gassack-Seitenaufprall-Schutzeinrichtung nach Anspruch 1, dadurch gekennzeichnet, daß der Kopfschutz-Gassack (16) mit dem Thoraxschutz-Gassack (14) in Strömungsverbindung steht.

3. Gassack-Seitenaufprall-Schutzeinrichtung nach Anspruch 1, dadurch gekennzeichnet, daß im Bereich der Ausströmöffnung (30) eine Abtrenn-Naht (32) vorgesehen ist, so daß die Querschnittsfläche der Ausströmöffnung (30) vermindert ist.

4. Gassack-Seitenaufprall-Schutzeinrichtung nach einem der vorhergehenden Ansprüche, dadurch gekennzeichnet, daß der Kopfschutz-Gassack (16) einteilig mit dem Thoraxschutz-Gassack (14) ausgebildet ist.

5. Gassack-Seitenaufprall-Schutzeinrichtung nach einem der vorhergehenden Ansprüche, dadurch gekennzeichnet, daß zur Stabilisierung des Kopfschutz-Gassackes (16) relativ zum Thoraxschutz-Gassack (14) eine abgenähte Gewebefläche (42) vorgesehen ist.

6. Gassack-Seitenaufprall-Schutzeinrichtung nach einem der Ansprüche 1 bis 4, dadurch gekennzeichnet, daß zur Stabilisierung des Kopfschutz-Gassackes (16) relativ zum Thoraxschutz-Gassack (14) mindestens ein Fangband (44) vorgesehen ist.

## Claims

1. A gas bag lateral impact protective device for vehicle occupants, which is integrated in a vehicle door and comprises a compressed gas source (12) and a thorax protecting gas bag (14) which is inflatable by the compressed gas source via an inflation opening and which deploys on inflation in a space to the side of the vehicle door, an outlet opening (30) being provided on the thorax protecting gas bag (14), and a head protecting gas bag (16) which is mounted on the thorax protecting gas bag (14) and deploys on inflation above the thorax protecting gas bag (14), an inlet opening of the head protecting gas bag (16) coinciding with the outlet opening (30) of the thorax protecting gas bag (14), and a dividing seam (24) which divides the thorax protecting gas bag (14) into a first and a second chamber (26, 28) connected with each other for fluid flow, the outlet opening (30) leading out of the second chamber (28), characterized in that the inflation opening is arranged in the first chamber (26), and the dividing seam (24) is provided in the fluid path from the compressed gas source (12) to the outlet opening (30).

2. The gas bag lateral impact protective device as claimed in claim 1, characterized in that the head protecting gas bag (16) is connected with the thorax protecting gas bag (14) for fluid flow therebetween.

3. The gas bag lateral impact protective device as claimed in claim 1, characterized in that a sewing-off seam (32) is provided in the region of the outlet opening (30) so that the cross sectional area of the outlet opening (30) is reduced.

4. The gas bag lateral impact protective device as claimed in any one of the preceding claims, characterized in that the head protecting gas bag (16) is formed integrally with the thorax protecting gas bag (14).

5. The gas bag lateral impact protective device as claimed in any one of the preceding claims, characterized in that a taken-in fabric area (42) is provided for stabilizing the head protecting gas bag (16) with respect to the thorax protecting gas bag (14).

6. The gas bag lateral impact protective device as claimed in any one of claims 1 to 4, characterized in that at least one tethering strap (44) is provided for stabilizing the head protecting gas bag (16) with respect to the thorax protecting gas bag (14).

## Revendications

1. Dispositif de protection à coussin gonflable contre les chocs latéraux pour les passagers d'un véhicule, qui est intégré dans une portière de véhicule et présente une source de gaz sous pression (12) et un coussin gonflable (14) de protection de thorax gonflable par cette source au travers d'un orifice d'injection, qui se déplie lors du gonflement du coussin dans un espace qui se trouve sur le côté de la portière du véhicule, un orifice de sortie (30) étant prévu sur le coussin gonflable (14) de protection du thorax, ainsi qu'un coussin gonflable (16) de protection de la tête, monté sur le coussin gonflable (14) de protection du thorax, qui se déplie lors du gonflement au dessus du coussin d'air (14) de protection du thorax, un orifice d'entrée du coussin gonflable (16) de protection de la tête coïncidant avec l'orifice de sortie (30) du coussin gonflable (14) de protection du thorax, et une couture de subdivision (24) qui partage le coussin gonflable (14) de protection du thorax en des première et en une deuxième chambres (26, 28), qui sont en liaison d'écoulement l'une avec l'autre, l'orifice de sortie (30) partant de la deuxième chambre (28) caractérisé en ce que l'orifice d'injection est situé dans la première chambre et en ce que la couture de subdivision (24) est située sur le chemin d'écoulement de la source de gaz sous pression (12) à l'orifice de sortie.

2. Dispositif de protection à coussin gonflable contre les chocs latéraux selon la revendication 1, caractérisé en ce que le coussin gonflable (16) de protection de la tête dispose d'une liaison d'écoulement avec le coussin gonflable (14) de protection du thorax.

3. Dispositif de protection à coussin gonflable contre les chocs latéraux selon la revendication 1, caractérisé en ce que dans la zone de l'orifice de sortie (30) il est prévu une couture de séparation (32), de telle sorte que la surface de la section transversale de l'orifice de sortie (30) soit réduite.

4. Dispositif de protection à coussin gonflable contre les chocs latéraux selon l'une des revendications précédentes, caractérisé en ce que le coussin gonflable (16) de protection de la tête est constitué d'une seule pièce avec le coussin gonflable (14) de protection du thorax.

5. Dispositif de protection à coussin gonflable contre les chocs latéraux selon l'une des revendications précédentes, caractérisé en ce que pour stabiliser le coussin gonflable (16) de protection de la tête par rapport au coussin gonflable (14) de protection du thorax, on prévoit une surface de tissu (42) qui est cousue.

6. Dispositif de protection à coussin gonflable contre les chocs latéraux selon l'une des revendications 1 à 4, caractérisé en ce que pour stabiliser le coussin gonflable (16) de protection de la tête par rapport au coussin gonflable (14) de protection du thorax, on prévoit au moins une bande de garde (44).
